# EUROPEAN PATENT APPLICATION

(11) **EP 3 145 061 A1**
(43) Date of publication of application: **22.03.2017**
(21) Application number: 15185591.3
(22) Date of filing: 17.09.2015
(51) Int. Cl.: H02K 7/02, H02K 9/06, H02K 9/10

(54) **AN ELECTRIC POWER GENERATOR**

(71) Applicant: ABB Technology AG, 8050 Zürich (CH)
(72) Inventor: Raute, Rami, 00980 Helsinki (FI); Pohjoisaho, Kosti, 00380 Helsinki (FI)
(74) Representative: Kolster Oy Ab

(57) **Abstract**

The electric power generator comprises a shaft (10) rotatably supported with bearings (14, 15) at a frame construction (60), a rotor (20) rotating with the shaft (10), a stator (30) comprising a stator winding having ends (31 A) protruding axially (X-X) outwards from the axial (X-X) ends of the stator (30), the stator (30) surrounding the rotor (20) and being attached to the frame construction (60). A first end compartment (71) is formed between first axial (X-X) ends of the stator (30) and the rotor (20) and a first end portion (61) of the frame construction (60). A second end compartment (72) is formed between second axial (X-X) ends of the stator (30) and the rotor (20) and a second end portion (62) of the frame construction (60). A flywheel unit (100) is attached to the shaft (10) in at least one of the first end compartment (71) and the second end compartment (72). The flywheel unit (100) comprises a fan (110) for passing cooling air (L1) through the electric power generator (200), and an air guide (120) extending radially outwards from the fan (110) for guiding the cooling air (F1) to pass across the ends (31A) of the stator winding, said air guide (120) forming either also an inertia mass (130) or an inertia mass (130) being provided in the flywheel unit (100) in addition to the air guide (120), which inertia mass (130) extends radially outwards from the air guide (120).

## Description

### FIELD OF THE INVENTION

The present invention relates to an electric power generator.

### BACKGROUND ART

US patent application 2004/0146397 discloses a fan-flywheel-pulley assembly for use in conjunction with an electric motor. The assembly comprises a pulley positioned about a central axis and a flywheel coupled to the pulley and positioned about the central axis. The cylindrical flywheel has an inner diameter and an outer diameter and comprises a radial fan and a baffle portion. The radial fan includes a plurality of blades extending at least from the inner diameter to the outer diameter of the flywheel. An opening is formed between each of two adjacent fan blades at the outer diameter of the flywheel, said openings forming air outlet openings. The cylindrical baffle portion has a cylindrical inner surface forming an air inlet opening and being positioned at a close distance from the cylindrical outer surface of the electric motor at one end of the electric motor. The cylindrical outer surface of the baffle coincides with the cylindrical outer surface of the flywheel. The pulley, the flywheel, and the radial fan may be integrally formed.

Generally in order to connect an electric power generator to the grid, the electric power generator must comply with grid code requirements of that particular location. One such grid code requirement is the fault ride through operation of the electric power generator for the entire duration of the grid event.

Several kinds of faults may occur during operation of the electric power generator such as voltage dip, voltage sag, or a short circuit at a point of interconnection with the power grid. In an event of fault certain types of electric power generators accelerate rapidly, loose synchronism during operation, and, consequently, fail the grid code fault ride through requirement. The grid code requirements of today require a fault ride through time of 250 ms for an electric power generator. This means that the electric power generator should stay in synchronism during the fault ride through time so that the electric power generator can be reconnected to the grid at any time during the fault ride through time.

One solution to try to prevent the electric power generator from losing synchronism during a grid fault is to mount a separate external flywheel on the shaft of the electric power generator. The separate flywheel is normally mounted on the shaft of the electric power generator axially outside the bearings supporting the shaft of the electric power generator. The external flywheel increases the rotation inertia of the rotor of the electric power generator. The increased rotation inertia achieved with the flywheel will oppose more effectively a change in the rotation speed of the electric power generator during a grid fault situation. An external flywheel must, however, for safety reasons be enclosed in a separate housing. The separate housing enclosing the flywheel requires thus additional space in the axial direction of the electric power generator.

An electric power generator can be driven by a combustion engine, whereby the electric power generator and the combustion engine are often mounted on a common frame construction. The rotation speed of a synchronous electric power generator connected to a combustion engine tends to race in a fault situation. This means that the synchronous generator loses synchronism and cannot be connected back to the grid before the synchronous rotation speed is restored. The grid code, however, requires that it must be possible to reconnect the synchronous generator immediately to the grid at any moment during a 250 ms fault ride through period. The rotation speed of the synchronous generator must thus be kept at the synchronous speed during this 250 ms fault ride through period after a fault occurs in the grid. The flywheel will contribute to restrict abrupt changes in the rotation speed of the synchronous generator during a grid fault.

### BRIEF DESCRIPTION OF THE INVENTION

An object of the present invention is to achieve an improved electric power generator.

The electric power generator according to the invention is characterized by what is stated in the independent claim 1.

The electric power generator according to the invention comprises a shaft, a rotor, a stator, and a frame construction having a first end portion, a second end portion opposite to the first end portion, and a circumference portion surrounding the stator,
the shaft being rotatably supported with bearings at the frame construction of the electric power generator,
the rotor being attached to the shaft so that the rotor rotates with the shaft,
the stator comprising a stator winding having ends protruding axially outwards from the axial ends of the stator, the stator surrounding the rotor and being attached to the frame construction,
an air gap being formed between the outer surface of the rotor and the inner surface of the stator,
a first end compartment being formed between the first axial ends of the stator and the rotor and the first end portion of the frame construction,
a second end compartment opposite to the first end compartment being formed between the second axial ends of the stator and the rotor and the second end portion of the frame construction.

The electric power generator is characterized in that:
a flywheel unit is attached to the shaft in at least one of the first end compartment and the second end compartment, the flywheel unit comprising a fan for passing cooling air through the electric power generator, and an air guide extending radially outwards from the fan for guiding the cooling air to pass across the ends of the stator winding, said air guide forming either also an inertia mass or an inertia mass being provided in the flywheel unit in addition to the air guide, which inertia mass extends radially outwards from the air guide.

The flywheel unit will contribute to restrict abrupt changes in the rotation speed of the electric power generator during a grid fault. It is advantageous to position the flywheel unit within the electric power generator compared to the use of a separate external flywheel as no separate casing for the flywheel is needed. It is also possible to integrate several functions into the flywheel unit when the flywheel unit is positioned within the electric power generator. The fan, the air guide, and the inertia mass can be integrated into one entity in the flywheel unit.

### BRIEF DESCRIPTION OF THE DRAWINGS

In the following the invention will be described in greater detail by means of preferred embodiments with reference to the attached drawings, in which
Figure 1 shows an axial cross section of an electric power generator,
Figure 2 shows an axial cross section of a first embodiment of a flywheel unit for an electric power generator,
Figure 3 shows a traverse cross section of the flywheel unit shown in figure 2,
Figure 4 shows an axial cross section of a second embodiment of a flywheel unit for an electric power generator,
Figure 5 shows an axial cross section of a third embodiment of a flywheel unit for an electric power generator,
Figure 6 shows an axial cross section of a fourth embodiment of a flywheel unit for an electric power generator.

### DETAILED DESCRIPTION OF THE INVENTION

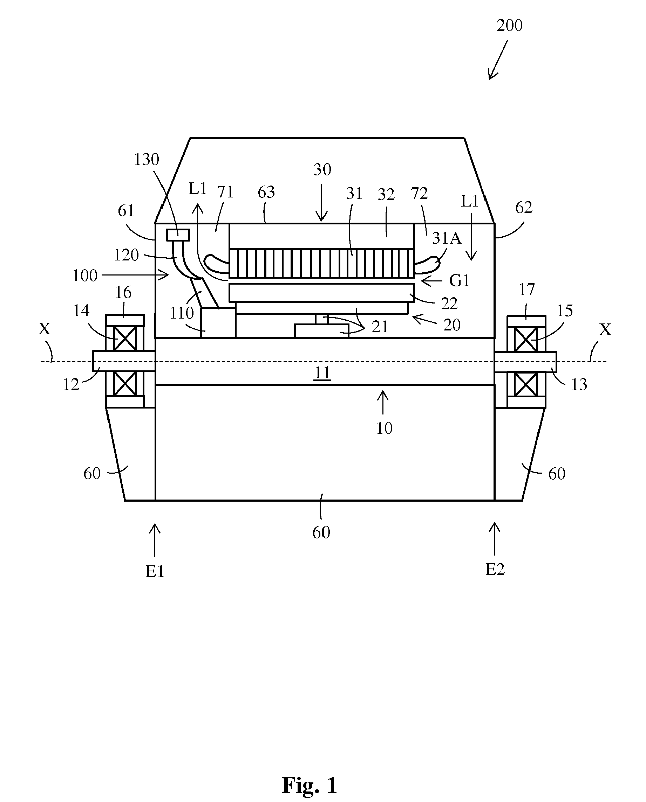

Figure 1 shows an axial cross section of an electric power generator. The electric power generator comprises a shaft 10, a rotor 20, a stator 30, and a frame construction 60.

The shaft 10 comprises a middle portion 11 and two opposite end portions 12, 13. The shaft 10 is rotatably supported with bearings 14, 15 positioned in respective bearing housings 16, 17 at the frame construction 60 of the electric machine 200. The bearings 14, 15 are positioned at respective end portions 12, 13 of the shaft 10.

The rotor 20 is attached to the middle portion 11 of the shaft 10 so that the rotor 20 rotates with the shaft 10. The rotor 20 comprises a rotor frame 21 having a cross section of a laying letter H. The lower branch of the letter H is firmly attached to the middle portion 11 of the shaft 10. The upper branch of the letter H forms a support cylinder for the cylindrical rotor core 22. The rotor core 22 may comprise a rotor winding (not shown in the figure).

The stator 30 surrounds the rotor 20 and is attached to the frame construction 60 of the electric power generator 200. The stator 30 comprises a cylindrical stator core 31 surrounding the rotor 20 and a stator frame 32. The stator core 31 comprises a stator winding of which only the end portions 31A are shown. The end portions 31A of the stator winding protrude out from the stator core 31 at both axial X-X ends of the stator core 31. The stator frame 32 surrounds the stator core 31 and the stator core 31 is firmly attached to the stator frame 32. The stator frame 32 forms part of the frame construction 60 of the electric power generator 200.

An air gap G1 is formed between the rotor 20 and the stator 30.

The frame construction 60 of the electric power generator 200 comprises a first end portion 61 positioned at a first end E1 of the electric power generator 200 at an axial X-X distance from first axial X-X ends of the rotor 20 and the stator 30. The frame construction 60 of the electric power generator 200 comprises a second end portion 62 opposite to the first end portion 61 positioned at a second end E2 of the electric power generator 200 at an axial X-X distance from opposite second axial X-X ends of the rotor 20 and the stator 30. The frame construction 60 of the electric power generator 200 comprises further a circumference portion 63 surrounding the stator 30.

A first end compartment 71 is formed between the first axial X-X ends of the stator 30 and the rotor 20 and the first end portion 61 of the frame construction 60 of the electric machine 200. A second end compartment 72 opposite to the first end compartment 71 is formed between the second axial X-X ends of the stator 30 and the rotor 20 and the second end portion 62 of the frame construction 60 of the electric power generator 200.

A flywheel unit 100 is attached to the shaft 10 so that the flywheel unit 100 is positioned in the first end compartment 71. The flywheel unit 100 rotates with the shaft 10. The flywheel unit 100 comprises a fan 110, an air guide 120 extending radially outwards from the fan 110, and an inertia mass 130 extending radially outwards from the air guide 120. The fan 110 is the radially innermost component and the inertia mass 130 is the radially outermost component in the flywheel unit 100. The fan 110 is a radial fan 110 in the figure.

Cooling air L1 is conducted into the second end compartment 72 from the exterior e.g. through perforations in the circumference of the second end compartment 72. The cooling air L1 is then conducted in the axial X-X direction through the electric power generator 200 through axial cooling air channels in the electric power generator 200. The air gap G1 between the rotor 20 and the stator 30 forms one axial X-X cooling air channel through which cooling air L1 can pass. There can also be additional axial X-X cooling air channels provided in the rotor 20 and/or the stator 30. The cooling air L1 passing through the electric power generator 200 enters into an inlet opening 145 of the radial fan 110 in the middle portion of the radial fan 110 and is blown out in the radial direction from an outlet opening 146 of the radial fan 110 on the outer circumference of the radial fan 110. The cooling air L1 is blown out from the outlet opening 146 of the radial fan 110 into the first end compartment 71 and guided by the air guide 120 to pass across the ends 31A of the stator winding in order to cool the stator winding. The cooling air L1 is then conducted to the exterior e.g. through perforations in the circumference of the first end compartment 71. The cooling air L1 circulation may be closed or open. The cooling air L1 may in a closed circulation pass through a heat exchanger where the cooling air L1 is cooled. This arrangement provides an asymmetric cooling of the electric power generator 200.

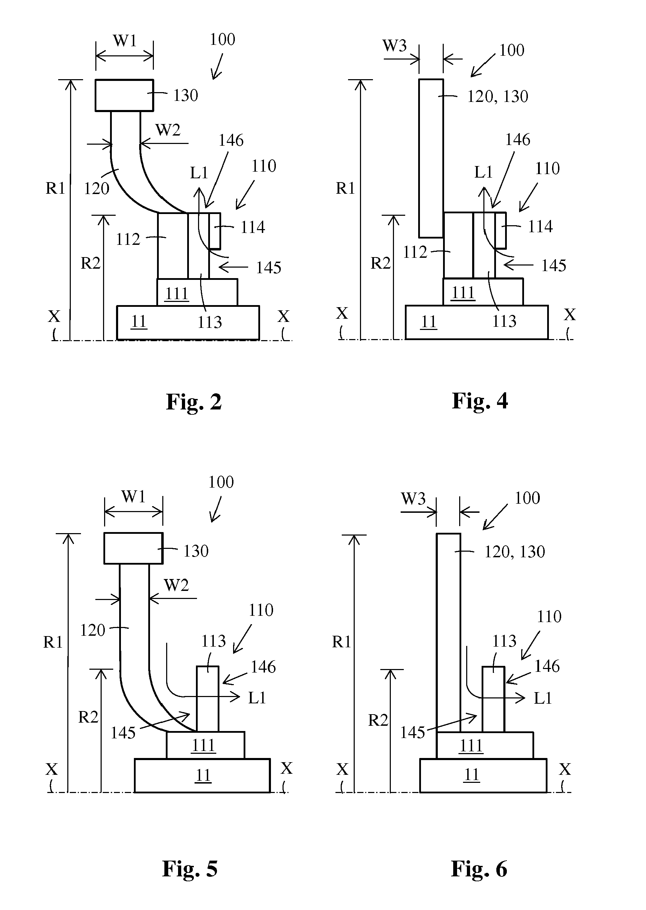

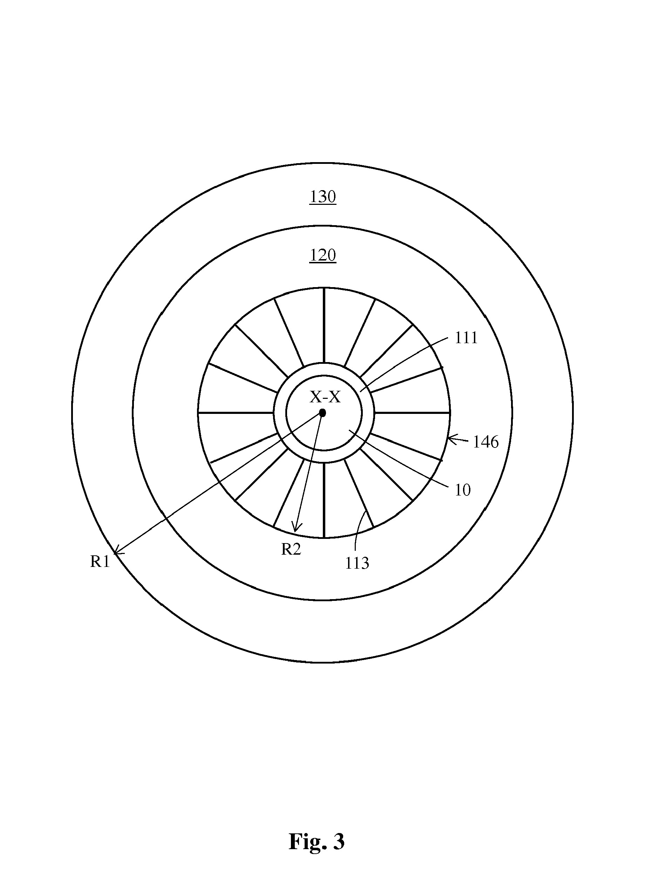

Figure 2 shows an axial cross section of a first embodiment of a flywheel unit for an electric power generator and figure 3 shows a traverse cross section of the flywheel unit shown in figure 2. The flywheel unit 100 comprises a fan 110, an air guide 120 and an inertia mass 130.

The fan 110 comprises a flange 111 being attached to the shaft 10 and/or to the frame 21 of the rotor 20, a support disc 112 being attached to the flange 111, and essentially radially extending straight or curved blades 113 being attached to the support disc 112. There may be a covering disc 114 opposite to the support disc 112. The covering disc 114 has a circular opening 145 in the middle forming an air inlet opening 145 for the fan 110. An outlet opening 146 of the fan 110 is formed on the outer circumference of the fan 110. Air is blown out from the fan 110 along the channels formed between each pair of blades 113. The fan 110 is thus a radial fan 110 i.e. air L1 is sucked through the inlet opening 145 into the middle portion of the fan 110 and air L1 is blown out radially from the outlet opening 146 on the outer circumference of the fan 110 when the fan 110 is rotating with the shaft 10.

An air guide 120 is further adapted to the outer circumference of the support disc 112. The air guide 120 guides the air L1 blown out radially from the outlet opening 146 of the fan 110 to pass across the ends 31A of stator winding in order to cool the stator winding. The air guide 120 extends radially outwards from the fan 110. The air guide 120 extends radially beyond the end 31 A of the stator winding.

An inertia mass 130 is further adapted to the outer circumference of the air guide 120. The inertia mass 130 extends radially outwards from the air guide 120. The inertia mass 130 forms the radially outermost portion in the flywheel unit 100. The inertia mass 130 is needed in order to meet grid code requirements. The inertia mass 130 increases the rotation inertia of the rotor 20 of the electric power generator 200. The rotation inertia of the inertia mass 130 is proportional to the diameter of the inertia mass 130, whereby a large diameter of the inertia mass 130 is advantageous. The air guide 120 forms naturally also a part of the total inertia mass of the rotor 20. The axial width W1 of the inertia mass 130 may be greater than the axial width W2 of the air guide 120.

The flywheel unit 100 in figure 2 is advantageously made from iron in a casting process. The flywheel unit 100 comprising the fan 110, the air guide 120 and the inertia mass 130 is thus formed as a single entity, where all components form an integral part of the entity.

Figure 4 shows an axial cross section of a second embodiment of a flywheel unit for an electric power generator. The fan 110 corresponds in this embodiment to the fan 110 in figures 2 and 3. The fan 110 is formed from iron in a casting process. The air guide 120 and the inertia mass 130 are, however, formed as a steel part that is attached to the fan 110. The air guide 120 and the inertia mass 130 extend radially outwards from the fan 110. The air guide 120 and the inertia mass 130 can be attached e.g. with axial bolts to the side surface of the support disc 112 of the fan 110. The air guide 120 and the inertia mass 130 could naturally also be attached with radial bolts to the outer circumference of the support disc 112 of the fan 110. The air guide 120 and the inertia mass 130 could naturally also be attached with a shrink fit to the outer circumference of the support disc 112 of the fan 110. The combined air guide 120 and inertia mass 130 has in this embodiment uniform axial width W3. The inertia mass 130 could, however, be formed as an axially wider piece also in this embodiment. The situation would then correspond to the situation in figure 2.

Figure 5 shows an axial cross section of a third embodiment of a flywheel unit for an electric power generator. The fan 110 is in this embodiment an axial fan 110 i.e. air is blown axially X-X through the axial fan 110. An axial fan 110 can be used in an asymmetric or in a symmetric cooling of the electric power generator 200.

In the case of an asymmetric cooling, the flywheel 100 having an axial fan 110 is positioned only in one of the first end compartment 71 and the second end compartment 72 of the electric power generator 200. The axial fan 110 sucks cooling air L1 from the respective end compartment 71, 72 and blows it axially X-X through the electric power generator 200 to the opposite end compartment 71, 72. The air guide 120 would guide the cooling air L1 that is sucked to the inlet opening 145 of the axial fan 110 to pass across the ends 31A of the stator winding. The cooling air L1 passes into and out of the respective end compartment 71, 72 through perforations in the circumference 63 of the frame structure 60.

In the case of a symmetric cooling, a first flywheel 100 having a first axial fan 110 is positioned in the first end compartment 71 of the electric power generator 200 and a second flywheel 100 having a second axial fan 110 is positioned in the second end compartment 72. Both axial fans 110 blow cooling air L1 axially X-X into the electric power generator 200 from opposite ends E1, E2 of the electric power generator 200. At least the stator 30 is provided with radial air ducts so that the cooling air L1 can pass radially out from the electric power generator 200. The cooling air L1 is conducted to the first end compartment 71 and the second end compartment 72 through perforations in the circumference of the respective end compartment 71, 72. The cooling air L1 is guided with the air guide 120 across the ends 31A of the stator winding and further axially X-X into the inlet opening 145 of the axial fan 110 and further axially X-X out from the outlet opening 146 of the axial fan 110 into the electric power generator 200.

Figure 6 shows an axial cross section of a fourth embodiment of a flywheel unit for an electric power generator. The fan 110 corresponds in this embodiment to the fan 110 in figure 5. The fan 110 is formed from iron in a casting process. The air guide 120 and the inertia mass 130 are, however, formed as a steel part that is attached to the fan 110. The air guide 120 and the inertia mass 130 can be attached e.g. with axial or radial bolts to the flange 111 of the fan 110. The air guide 120 and the inertia mass 130 could naturally also be attached with a shrink fit to the outer circumference of the flange 111 of the fan 110. The combined air guide 120 and inertia mass 130 has in this embodiment a uniform axial width W3. The inertia mass 130 could, however, be formed as an axially wider piece also in this embodiment. The situation would then correspond to the situation in figure 2.

The end compartments 71, 72 could be of the same or of different size. The end compartment 71, 72 receiving the flywheel 100 must naturally be big enough to accommodate the flywheel unit 100, but the other end compartment 71, 72 could be smaller. In the case the flywheel unit 100 is only in one of the end compartments 71, 72, a prior art stationary air guide could be used in connection with the ends 31A of the stator winding in the opposite end compartment 71, 72. The prior art stationary air guide would then guide the air sucked by the fan 110 in the flywheel unit 100 to pass across the ends 31A of the stator winding in the opposite end compartment 71, 72.

A 30 MW electric power generator has a shaft height of 1.6 m and the radius of the middle portion 11 of the shaft 10 is 0.5 m. A flywheel 100 can be positioned in the first end compartment 71 and/or the second end compartment 72 in such a 30 MW electric power generator. The dimensions of the end compartments 71, 72 are such that it is possible to achieve an outer radius R1 of 1.5 m for the inertia mass 130 and an outer radius R2 of 0.75 m for the fan 110.

The ratio between the outer radius R1 of the inertia mass 130 in the flywheel 100 and the outer radius R2 of the fan 110 in the flywheel 100 is advantageously in the range of 1.8 to 2.2.

The axial width W1 of the inertia mass 130 is advantageously 1.2 to 2.5 times the axial width of the air guide 120.

At least 70% of the total mass of the flywheel unit 100 is advantageously positioned in the portion of the flywheel unit 100 that is positioned radially outside the outer radius R1 of the fan 110 of the flywheel unit 100.

The flywheel unit 100 forms in all embodiments a single entity that is attached to the shaft 10.

The invention can advantageously be applied in an electric power generator having a power of at least 10 MW. The shaft height of the electric power generator is advantageously at least 1.0 m.

The electric power generator is advantageously a synchronous generator. The rotor of the synchronous generator could be provided with a rotor winding or it could be provided with permanent magnets.

The invention is not limited to the examples described above but may vary within the scope of the claims.

## Claims

1. An electric power generator comprising a shaft (10), a rotor (20), a stator (30), and a frame construction (60) having a first end portion (61), a second end portion (62) opposite to the first end portion (61), and a circumference portion (63) surrounding the stator (30),
the shaft (10) being rotatably supported with bearings (14, 15) at the frame construction (60),
the rotor (20) being attached to the shaft (10) so that the rotor (20) rotates with the shaft (10),
the stator (30) comprising a stator winding having ends (31A) protruding axially (X-X) outwards from the axial (X-X) ends of the stator (30), the stator (30) surrounding the rotor (20) and being attached to the frame construction (60),
an air gap (G1) being formed between the rotor (20) and the stator (30),
a first end compartment (71) being formed between the first axial (X-X) ends of the stator (30) and the rotor (20) and the first end portion (61) of the frame construction (60),
a second end compartment (72) opposite to the first end compartment (71) being formed between the second axial (X-X) ends of the stator (30) and the rotor (20) and the second end portion (62) of the frame construction (60),
**characterized in that**
a flywheel unit (100) is attached to the shaft (10) in at least one of the first end compartment (71) and the second end compartment (72), the flywheel unit (100) comprising a fan (110) for passing cooling air (L1) through the electric power generator (200), and an air guide (120) extending radially outwards from the fan (110) for guiding the cooling air (F1) to pass across the ends (31A) of the stator winding, said air guide (120) forming either also an inertia mass (130) or an inertia mass (130) being provided in the flywheel unit (100) in addition to the air guide (120), which inertia mass (130) extends radially outwards from the air guide (120).

2. An electric power generator according to claim 1, **characterized in that** the flywheel unit (100) is positioned only in one of the first end compartment (71) and the second end compartment (72), whereby the fan (110) passes cooling air (L1) in the axial (X-X) direction through the electric power generator (200) between the end compartments (71, 72) and the air guide (120) guides the cooling air (L1) to pass across the ends (31 A) of the stator winding.

3. An electric power generator according to claim 1, **characterized in that** a first flywheel unit (100) is positioned in the first end compartment (71) and a second flywheel unit (100) is positioned in the second end compartment (72), whereby each fan (110) passes cooling air (L1) into the electric power generator (200) and each air guide (120) guides said cooling air (L1) to pass across the ends (31A) of the stator winding, whereby the cooling air (L1) blown into the electric power generator (200) from both ends of the electric power generator (200) is directed through radial air ducts out of the electric power generator (200).

4. An electric power generator according to any one of claims 1 to 3, **characterized in that** the flywheel unit (100) forms a single entity that is attached to the shaft (10).

5. An electric power generator according to any one of claims 1 to 4, **characterized in that** the flywheel unit (100) is formed by casting iron to form the entire flywheel unit (100) comprising the fan (110), the air guide (120), and the inertia mass (130).

6. An electric power generator according to any one of claims 1 to 4, **characterized in that** the flywheel unit (100) is formed by casting iron to form the fan (110), whereby the air guide (120) and the inertia mass (130) is formed of a steel piece that is attached with a compression joint to the fan (110), the flywheel unit (100) forming a single entity that is attached to the shaft (10).

7. An electric power generator according to any one of claims 1 to 6, **characterized in that** the ratio between an outer radius (R1) of the inertia mass (130) in the flywheel unit (100) and an outer radius (R2) of the fan (110) in the flywheel unit (100) is in the range of 1.8 to 2.2.

8. An electric power generator according to claim 7, **characterized in that** at least 70% of the total mass of the flywheel unit (100) is positioned in the portion of the flywheel unit (100) that is positioned radially outside the outer radius (R2) of the fan (110) of the flywheel unit (100).

9. An electric power generator according to any one of claims 1 to 8, **characterized in that** the power of the electric power generator is at least 10 MW.

10. An electric power generator according to any one of claims 1 to 9, **characterized in that** the power of the electric power generator has a shaft height of at least 1.0 m.

11. An electric power generator according to any one of claims 1 to 10, **characterized in that** the electric power generator is a synchronous generator.
